# EUROPÄISCHE PATENTSCHRIFT

(11) **EP 0 429 033 B1**
(45) Veröffentlichungstag und Bekanntmachung des Hinweises auf die Patenterteilung: **10.08.1994**
(21) Anmeldenummer: 90122055.8
(22) Anmeldetag: 18.11.1990
(51) Int. Cl.: B64F 1/315

(54) **Fluggasttreppe**
Aircraft passenger stairs
Escalier pour passagers d'avions

(30) Priorität: 25.11.1989 DE 3939076; 18.11.1989 DE 3938432
(43) Veröffentlichungstag der Anmeldung: 29.05.1991
(73) Patentinhaber: Wenzel, Lothar H., Dipl.-Ing., D-57629 Luckenbach (DE)
(72) Erfinder: Wenzel, Lothar H., Dipl.-Ing., D-57629 Luckenbach (DE)
(74) Vertreter: Weber, Dieter, Dr.

(56) Entgegenhaltungen:
- DE-A- 1 965 471
- DE-A- 2 046 238
- DE-A- 2 909 052
- FR-A- 2 064 427
- US-A- 3 664 456
- US-A- 4 640 528
- PATENT ABSTRACTS OF JAPAN vol. 8, no. 54 (M-282)(1491) 10 März 1984,& JP-A-58 206469 (KANTOU JIDOUSHIYA KOGYO K.K.) 1 Dezember 1983,

## Beschreibung

Die vorliegende Erfindung betrifft eine Fluggasttreppe mit einem Fahrgestell mit Antrieb sowie einer ausfahrbaren höhenverstellbaren Treppe.

Derartige fahrbare und höhenverstellbare Fluggasttreppen werden auf vielen Flughäfen eingesetzt, wo Fluggäste auf dem Flughafenvorfeld in Flugzeuge ein- oder aussteigen müssen.

Die bisher bekannten Fluggasttreppen werden dabei auf ein herkömmliches Lkw-Fahrgestell montiert, wobei die Treppe im eingefahrenen Zustand teilweise in dem Bereich liegt, der ansonsten für eine Ladefläche vorgesehen ist, teilweise aber auch das Fahrerhaus des Lkw-Fahrgestells überragt, und so eine beträchtliche Bauhöhe erreicht (US-A-3 664 456).

Eine solche Fluggasttreppe auf Lkw-Fahrgestell wird im Bedarfsfall an ein Flugzeug herangefahren, woraufhin die mehrteilige Treppe ausgefahren werden muß und zwar soweit, daß die Übergangsplattform für den Übergang von der Fluggasttreppe zum Flugzeugrumpf in einer Höhe von maximal 5,6 m liegt. Dabei ragt der vordere Teil der Treppe mit der Plattform in der Regel weit über das Vorderende des Fahrgestells hinaus. Da außerdem handelsübliche Fahrgestelle Verwendung finden, deren Radstand und Spurweite nicht übermäßig groß ist, muß das Fahrzeug, um ein Umkippen sicher zu vermeiden, häufig vor dem vollständigen Ausfahren der Treppe zusätzliche Stützen im Bereich der Fahrgestellecken ausfahren. Weiterhin müssen Höhenschwankungen des Flugzeugrumpfes aufgrund wechselnder Beladungszustände ausgeglichen werden, ohne die Fluggasttreppe wieder vom Flugzeugrumpf wegzufahren. Zu diesem Zweck ist die Treppe um eine horizontale Achse schwenkbar auf dem Fahrgestell montiert. Diese schwenkbare Anordnung der Treppe auf einem herkömmlichen Lkw-Fahrgestell ist, wie bereits erwähnt, relativ instabil, so daß das Fahrgestell zusätzliche Stützen zur Stabilisierung aufweist. Das Ausfahren dieser Stützen ist zeitaufwendig und die schwenkbare Anordnung des Treppenaufbaues auf einem normalen Lkw-Fahrgestell ist arbeitsaufwendig, wobei das Fahrgestell nur unzureichende Ansatzpunkte für eine wirklich stabile schwenkbare Anordnung der Treppe bietet.

Demgegenüber liegt der vorliegenden Erfindung die Aufgabe zugrunde, eine Fluggasttreppe mit den eingangs genannten Merkmalen zu schaffen, welche die erforderlichen Sicherheits- und Stabilitätskriterien erfüllt, ohne daß zusätzliche Abstützungen erforderlich sind.

Diese Aufgabe wird dadurch gelöst, daß das Fahrgestell im wesentlichen aus einem vorderen und einem hinteren Fahrgestellteil besteht, welche durch ein Mittelgelenk verbunden sind, wobei das hintere Fahrgestellteil relativ zum vorderen Fahrgestellteil um die horizontale, zur Hinterachse des Fahrgestells im wesentlichen parallele Achse des Mittelgelenkes schwenkbar ist.

Diese Konstruktion ermöglicht eine starre Verbindung der ausfahrbaren Treppe mit dem Fahrgestell, da nunmehr das Verschwenken der Treppe über das Verschwenken des einen Fahrgestellteiles relativ zum anderen erfolgt.

Insbesondere kann ein solches Mittelgelenk relativ weit unten zwischen den Fahrgestellachsen angeordnet werden, so daß diese tiefe Anordnung der Schwenkachse möglichst nahe an den Radaufstandspunkten einen wesentlich stabileren Treppenaufbau ergibt.

Dabei sind zweckmäßigerweise an dem vorderen Fahrgestellteil und an dem hinteren Fahrgestellteil Anschläge vorgesehen, welche ein Verschwenken des hinteren Fahrgestellteils nach unten begrenzen.

Die Angabe der Verschwenkungsrichtung nach unten bezieht sich hierbei auf die bezüglich der Umgebung festliegende eigentliche Verschwenkachse, die mit der Hinterachse des Fahrgestells zusammenfällt. Da nämlich die Räder der Vorder- und der Hinterachse fest auf dem Boden aufstehen, bedeutet ein Verschwenken der beiden Fahrgestellteile um das Mittelgelenk relativ zueinander, daß die beiden Fahrgestellteile letztlich um die Vorder- bzw. Hinterachse verschwenken, wobei das Mittelgelenk je nach Verschwenkrichtung angehoben oder abgesenkt wird. Ein Verschwenken des hinteren Fahrgestellteils nach unten (um die Hinterachse) ist dabei gleichbedeutend mit einem Absenken des Mittelgelenkes. Solange der Verschwenkwinkel klein ist und die Achse des Mittelgelenkes nahe der Ebene liegt, die durch die Vorder- und die Hinterachse des Fahrgestells aufgespannt wird, kann man die Abstandsänderung zwischen Vorder- und Hinterachse durch das Anheben bzw. Absenken des Mittelgelenkes praktisch vernachlässigen. Ansonsten kann man aber auch zweckmäßigerweise die Vorderräder blockieren, so daß beim Verschwenken des Treppenteiles nach oben, wobei die Vorderkante der oberen Treppenplattform auf einem Kreisbogen um die Hinterachse 5 bewegt wird, was nicht nur mit einer Höhenänderung, sondern gleichzeitig auch mit einer Abstandsänderung zum Flugzeugrumpf verbunden ist, diese Abstandsänderung durch ein Verkürzen des Radstandes teilweise wieder ausgeglichen wird.

Vorzugsweise liegt jedoch die Achse des Mittelgelenkes in der Mittenposition des vorgesehenen Schwenkbereiches genau in der Ebene, die durch die Vorder- und die Hinterachse des Fahrgestells aufgespannt wird, so daß die Radstandsänderungen vernachlässigbar sind. Wegen des relativ niedrigen Treppenwinkels (der Winkel zwischen der Verbindungslinie Hinterachse-Vorderkante der oberen Plattform und der Horizontalen liegt unter 30°) und wegen des kleinen Verschwenkwinkels können auch die Abstandsänderungen in horizontaler Richtung gegenüber dem Flugzeugrumpf vernachlässigt werden, zumal diese Abstandsänderungen auch durch federnde Vorderkanten an der oberen Plattform ausgeglichen werden können.

Vorzugsweise ist vorgesehen, daß der Verschwenkwinkel des hinteren Fahrgestellteils, ausgehend von einer Mittelposition, mindestens ± 3° beträgt.

Dieser Verschwenkwinkel hat sich im allgemeinen als ausreichend erwiesen, um die Höhenschwankungen zwischen minimalem und maximalem Beladezustand eines Flugzeugs auszugleichen.

In der bevorzugten Ausführungsform der Erfindung ist vorgesehen, daß das vordere und das hintere Fahrgestellteil paarweise seitlich außerhalb des Treppenkörpers hochgezogene Seitenteile aufweisen, wobei auf einer Seite angeordnete Seitenteile des vorderen und hinteren Teils mit einander zugewandten Kanten und miteinander fluchtend angeordnet sind, wobei weiterhin diese Kanten an ihrem unteren Ende über das Mittelgelenk miteinander verbunden sind und die sich von dort nach oben erstreckenden Kanten einen Endanschlag für die Verschwenkung des hinteren Teils nach unten bilden. Diese hochgezogenen Seitenteile, welche entweder massive Platten oder auch ein Stahlfachwerk sein können, haben zweckmäßigerweise in der Seitenansicht eine dreieckige Form, wobei zwei Ecken dieser Dreiecke am Mittelgelenk zusammenstoßen, eine Ecke der Dreiecke mit je einer Achse des vorderen bzw. hinteren Fahrgestellteils zusammenfällt und wobei sich zwei Seiten des Dreieckes als vom Mittelgelenk aus im wesentlichen vertikal nach oben verlaufende Kanten gegenüberliegen. Im oberen Bereich dieser Kanten setzt dann zweckmäßigerweise ein Hydraulikelement zum Verschwenken der beiden Fahrgestellteile gegeneinander an, indem die erwähnten Anschlagkanten auseinandergedrückt werden oder indem ihr Abstand verringert wird.

Dabei ist das hintere Fahrgestellteil fest mit dem unteren Teil der ausfahrbaren Treppe verbunden. Wie bereits erwähnt, erhöht dies die Stabilität des Treppenteiles und auch der gesamten Fluggasttreppe mit Fahrgestell beträchtlich.

Dabei besteht die Treppe vorzugsweise aus drei gegeneinander verschiebbaren Treppenteilen mit je einer Abdeckung als kombiniertes Dach- und Seitenwandelement.

Die Seitenwandelemente der Treppenabdeckung für das untere Treppenteil, welches mit dem hinteren Fahrgestellteil fest verbunden ist, überdecken dabei vorzugsweise mindestens das hochgezogene Seitenteil des hinteren Fahrgestellteiles. Die Abdeckung kann sich auch über das Mittelgelenk und einen Teil des vorderen Fahrgestellteiles hinaus erstrecken. Dies ergibt nicht nur ein gefälligeres Aussehen der gesamten Fluggasttreppe und des Fahrgestells, sondern dient darüberhinaus auch dem Zweck, das Fahrgestell insbesondere im Bereich des Mittelgelenkes und der daran angeordneten Hydraulikelemente vor Witterungseinflüssen zu schützen.

Dabei sind vorzugsweise die Abdeckungen der weiter ausfahrbaren Treppenteile so gestaltet, daß die Abdeckung des jeweils weiter ausfahrbaren Teiles außen auf die Abdeckung des vorhergehenden Treppenteiles aufschiebbar ist, so daß die drei Abdeckungen im vollständig eingefahrenen Zustand aufeinandergeschoben sind, wobei die Abdeckung des oberen Treppenteiles die beiden darunterliegenden Abdeckungen im wesentlichen vollständig umfaßt. An dem oberen Treppenteil ist eine Plattform fest angebracht, wobei der Bedienstand für die Fahrertreppe, einschließlich der Steuerungseinrichtungen für das Fahrgestell vorzugsweise auf der Plattform angeordnet ist und über hydraulische und/oder elektrische Zuleitungen mit den Antriebs- und/oder Betriebseinrichtungen des Fahrgestells und der Treppe verbunden ist. Da ohnehin wegen des erwähnten Mittelgelenkes kein herkömmliches Lkw-Fahrgestell Verwendung findet, kann man so konsequenterweise das Fahrgestell auch ohne Fahrerhaus herstellen und sehr flach und niedrig, mit einem großen Radstand und großer Spurweite und entsprechender Stabilität konstruieren.

Wie bereits erwähnt, sind an dem vorderen Ende der oberen Plattform und auch an sich gegebenenfalls von dieser nach oben erstreckenden Seitenwänden einfedernde, an ihren Vorderkanten gepolsterte Plattenteile vorgesehen. Hierdurch wird eine Variation des Abstandes der oberen Plattform vom Flugzeugrumpf aufgrund des Verschwenkens der Treppe ausgeglichen. Außerdem kann so beim Heranfahren an den Flugzeugrumpf ohne die Gefahr von Beschädigungen desselben leichter manövriert werden.

Dabei ist auch an der Abdeckung der Plattform und zwar an deren vorderen Ende ein beweglicher Faltenbalg vorgesehen, der bei unterschiedlichen Abständen der Plattform zum Flugzeugrumpf immer dichtend an diesen angelegt werden kann.

Besonders bevorzugt ist eine Ausführungsform der Erfindung, bei welcher Spurweite und Radstand des Fahrgestells so gewählt werden, daß die Treppe im eingefahrenen Zustand im wesentlichen vollständig innerhalb einer vertikalen Projektion des von den Radaufstandspunkten aufgespannten Rahmens liegt, wobei im ausgefahrenen Zustand der Treppe der Schwerpunkt von Fahrgestell und Treppe deutlich innerhalb dieses Rahmens und im Abstand zur Vorderachse des Fahrgestells liegt.

Konkret bedeutet dies, daß die Räder des Fahrgestells soweit wie möglich in den äußersten Ecken desselben angeordnet werden. Damit ergibt sich ein maximaler Radstand und eine maximale Spurweite verbunden mit einer entsprechenden Stabilität der Treppe, so daß man auch bei vollständig ausgefahrener Treppe auf zusätzliche Abstützungen verzichten kann. Bezüglich der Längsmittelachse der Fahrgasttreppe ist diese, abgesehen von kleineren Komponenten wie beispielsweise einer Fahrerkabine, symmetrisch aufgebaut, so daß der Schwerpunkt des Gesamtsystems im wesentlichen über der Längsmittelachse von Fahrgestell und Treppe liegt. Die vollständig ausgefahrene Treppe überragt allerdings normalerweise das vordere Ende des Fahrgestells, da sie im eingefahrenen Zustand im wesentlichen mit der Vorderkante des Fahrgestells abschließt. Wenn allerdings der Radstand maximal gemacht wird, indem auch die Vorderachse möglichst nah an der Vorderkante des Fahrgestells liegt, so erreicht man, daß wesentliche Teile der ausgefahrenen Treppe noch immer zwischen Vorder- und Hinterachse des Fahrgestells liegen, so daß der Schwerpunkt des aus Fahrgestell und Treppe bestehenden Gesamtsystems mit erheblichem Abstand zur Vorderachse noch über dem von den Radaufstandspunkten aufgespannten Rahmen liegt. Daß die Treppe im eingefahrenen Zustand im wesentlichen vollständig innerhalb dieses Rahmens bzw. innerhalb einer vertikalen Projektion dieses Rahmens liegt, schließt nicht aus, daß beispielsweise kleinere Teile der Plattform die Vorderachse noch überragen oder daß, zur Erleichterung des Einstiegs in die Fluggasttreppe ein Teil des unteren Treppenteiles über die Hinterachse hinausragt, damit die erste Stufe möglichst dicht am Boden hinter der Hinterachse des Fahrgestells liegt.

Der Radstand wird jedoch auf jeden Fall so gewählt, daß auch bei vollständig ausgefahrener Treppe der Schwerpunkt des Gesamtsystems immer noch in einem horizontalen Abstand von mindestens 1 m vor der Vorderachse liegt. Bei einem Gesamtgewicht von ca. 10 bis 11 Tonnen der gesamten Fluggasttreppe ist dann praktisch ausgeschlossen, daß die Fluggasttreppe in eine instabile Lage kommt, selbst wenn ausschließlich die obere Plattform, welche über die Vorderachse hinausragt, mit Personen belastet ist.

Für die Bereifung werden vorzugsweise Reifen aus einem elastomeren Vollmaterial verwendet. Hierdurch wird vermieden, daß die Fluggasttreppe infolge eines Druckverlustes in einem Druckluftreifen kippt. Für die auf Flughäfen maximal zulässigen Geschwindigkeiten derartiger Fahrzeuge sind derartige Reifen völlig ausreichend, die im übrigen aufgrund des elastomeren Materials auch ausreichende Federungseigenschaften haben.

In Zahlen ausgedrückt beträgt die bevorzugte Mindestspurweite 2 m und der Radstand des Fahrgestells mindestens 6 m.

Für den Antrieb des Fahrgestells und für andere Aggregate, wie z.B. Hydraulikpumpen zum Aus fahren und Verschwenken der Treppe sind in der bevorzugten Ausführungsform der vorliegenden Erfindung Elektromotoren vorgesehen. Hierfür sind Batterietröge im Fahrgestell vorgesehen, wobei der Antrieb beispielsweise über einen Reihenschluß-Gleichstrommotor mit einer Leistung vom 20 kW bei einer Betriebsspannung von 80 Volt erfolgen kann. Für andere Aggregate wie z.B. die Beleuchtung und für die Steuerspannung reichten 24 Volt aus, die man durch Hintereinanderschalten zweier herkömmlicher 12 Volt Batterien erhält.

Die relativ großen und schweren Batterien tragen zusätzlich zur Stabilisierung und zu einer günstigen Schwerpunktslage der gesamten Treppe bei.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: die perspektivische Ansicht einer ausgefahrenen Fluggasttreppe,
- Figur 2: die Fluggasttreppe nach Figur 1, jedoch in eingefahrenem Zustand und ohne Abdeckungen, ebenfalls in perspektivischer Ansicht,
- Figur 3: eine schematische Darstellung wesentlicher Elemente des Fahrgestells und der Treppe in ausgefahrenem Zustand in einer Seitenansicht,
- Figur 4: eine Figur 3 entsprechende Darstellung mit der Treppe in eingefahrenem Zustand und
- Figur 5: einen Schnitt entlang der Linien V-V in Figur 4.

Die in den Figuren dargestellte Fluggasttreppe besteht aus einem Fahrgestell 50 mit eigenem Antrieb und einer Treppe 60, die aus drei Treppenteilen 8, 9, 10 besteht, wobei die Treppenteile 9 und 10 gegenüber dem fest mit dem hinteren Fahrgestellteil 2 verbundenen Treppenteil 8 beweglich sind und wobei an dem oberen Treppenteil 10 im Bereich dessen oberster Stufe eine Plattform 13 angeordnet und fest mit dem oberen Treppenteil 10 verbunden ist.

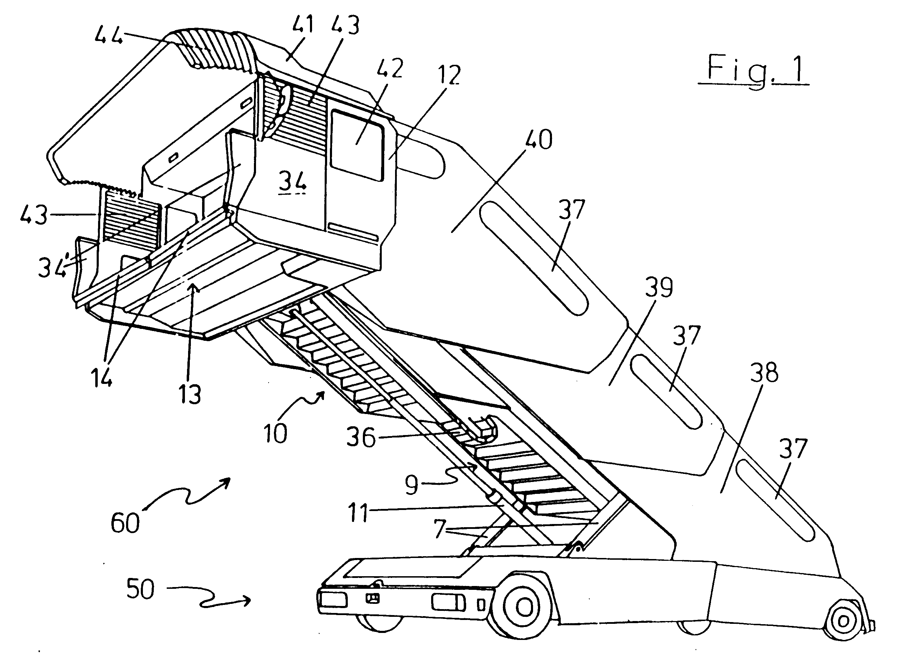

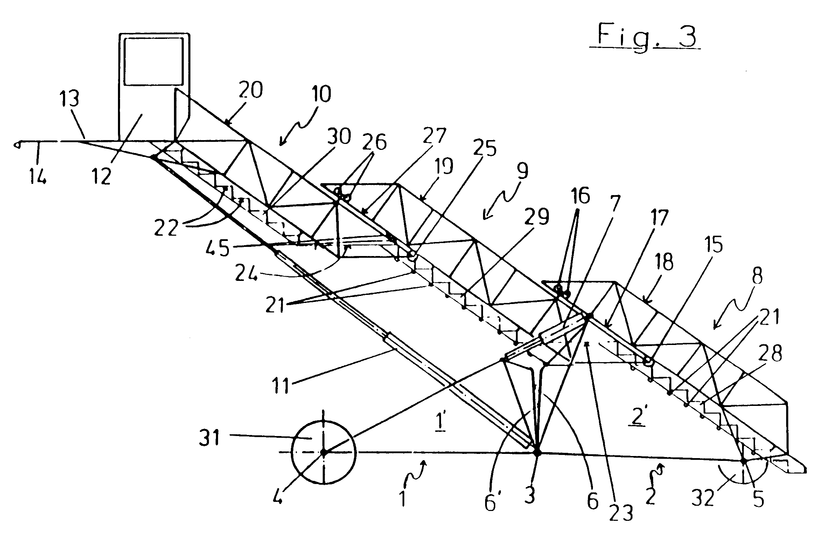

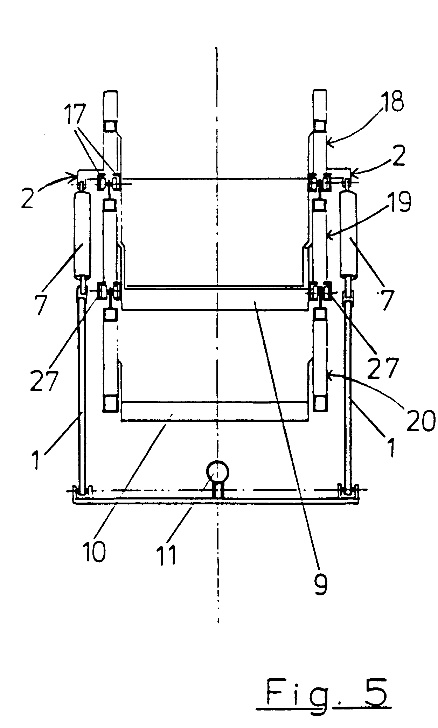

Die einzelnen Treppenteile sind über Gabelstaplerprofile 17, 27, welche im Schnitt in Figur 5 dargestellt sind, sowie über darin laufende Führungsrollen 15, 16, 25, 26, die schematisch auch in Figur 3 angedeutet sind, parallel zueinander verschieblich geführt. Die einzelnen Treppenteile bestehen im wesentlichen aus stählernen Fachwerkelementen 18, 19, 20, den eigentlichen Stufenteilen 28, 29, 30 mit Stufen 22, den darunter angeordneten Führungsschienen 17, 27 und den erwähnten Führungsrollen 15, 16, 25, 26, wobei jedes der Treppenteile 8, 9, 10 noch je eine Abdeckung aufweisen kann, die in Figur 1 mit 38, 39 und 40 bezeichnet sind.

An der Unterseite der Treppenteile 8 und 9 sind außerdem im Abstand ganzer Stufen Verriegelungsanschläge 21 vorgesehen, an welchen das jeweils darüberliegende Treppenteil 9 bzw. 10 jeweils beim Absenken in Einfahrrichtung einrasten kann. Mit dem Hydraulikelement 11, welches am Fahrgestell vorzugsweise im Bereich des Mittelgelenkes 3 und mit seinem anderen Ende am oberen Treppenelement 10 ansetzt wird also zunächst das obere Treppenteil 10 parallel zur Richtung der Treppensteigung ausgefahren und nimmt gegebenenfalls über Anschläge 45 das Mittelteil 9 in Ausfahrrichtung mit, sobald es bezüglich diesem seine maximale Ausfahrposition erreicht hat. Sobald die obere Plattform 13 die gewünschte Höhe im Bereich des unteren Randes der Türöffnung des Flugzeugrumpfes erreicht hat, wird eine nicht dargestellte Verriegelung an dem oberen Treppenteil 10 und/oder dem Mittelteil 9 aktiviert, welche beim nun folgenden Absenken bzw. Einfahren der Treppe in den nächstfolgenden Verriegelungsanschlag 21 eingreift, so daß es zwischen den Plattformen 23, 24, die den Übergang zwischen verschiedenen Treppenteilen bilden und dem vorhergehenden oder folgenden Treppenteil keine Stufe gibt, die eine von den übrigen Stufen 22 abweichende Höhe hätte. Die durch das Einstellen dieser festen Stufenbeziehung etwa von der Unterkante der Türöffnung am Flugzeugrumpf abweichende Höhe der Plattform 13 wird nunmehr durch leichtes Verschwenken der gesamten Treppe um die Hinterachse 5 des Fahrgestells ausgeglichen. Hierzu ist ein Hydraulikelement 7 vorgesehen, welches an einem Teil 2′ des zweiten Fahrgestellteiles 2 einerseits und an einem Teil 1′ des vorderen Fahrgestellteils 1 andererseits ansetzt und im Abstand zur Achse des Mittelgelenkes 3 senkrecht zu dieser Achse wirkt.

Da die Räder 32, 31 des Fahrgestells 50 auf dem Boden aufstehen, werden bei Betätigung des Hydraulikelementes 7 die beiden Fahrgestellteile 1, 2 um die Vorderachse 4 bzw. um die Hinterachse 5 des Fahrgestells verschwenkt, wobei das Mittelgelenk 3 je nach Richtung dieser Verschwenkung entweder angehoben oder abgesenkt wird. Mit dem hinteren Fahrgestellteil 2 verschwenkt auch die in ihrer Position relativ zum hinteren Fahrgestellteil 2 fixierte Treppe 60 als Ganzes. Anschläge 6, 6′ begrenzen dabei die Verschwenkung der Treppe 60 nach unten. Als weitere Besonderheit hervorzuheben ist die Anordnung der Fahrerkabine 12 auf der oberen Plattform 13. Die Kabine 12 ist beispielsweise über hydraulische und elektrische Zuleitungen, die beispielsweise in einer in Figur 1 erkennbaren Hohlgliederkette 36 geführt sein können, mit dem Fahrgestell 50 bzw. mit sämtlichen Antriebs-bzw. von der Führerkabine aus zusteuernden Betriebselementen der Fluggasttreppe verbunden. Der Fahrer kann also von dieser Kabine 12 aus sowohl die Fluggasttreppe als Ganzes fahren und lenken und er kann von hier aus auch die Fluggasttreppe ein- und ausfahren und verschwenken. Dabei können zweckmäßigerweise Sicherungseinrichtungen vorgesehen werden, die ein Fahren der Fluggasttreppe im ausgefahrenen Zustand auf eine Geschwindigkeit von beispielsweise unter 6 km/h begrenzen.

Im Gebrauch wird also eine solche Fluggasttreppe im eingefahrenen Zustand auf einem Flugplatzvorfeld an ein Flugzeug herangefahren, wobei seine Geschwindigkeit entsprechend üblichen Bestimmungen beispielsweise auf 30 km/h begrenzt sein kann. Sobald die Fluggasttreppe in die Nähe des Flugzeugrumpfes kommt, kann dann der Fahrer die Geschwindigkeit entsprechend herabsetzen, die Fluggasttreppe ausfahren und dabei langsam an den Flugzeugrumpf heranmanövrieren. Dabei hat der Fahrer von der Kabine 12 aus eine sehr gute Sicht auf sämtliche Teile im Bereich der oberen Plattform 13, welche mit dem Flugzeugrumpf in Berührung treten können und sollen. Dies sind insbesondere die geteilte Federleiste 14 an der Vorderkante der Plattform 13, die Frontteile oder Bumper 34′ an den Seitenwänden 34 und der Faltenbalg 44 am Dachelement 41 über der Plattform 13. Außerdem sind noch durch Jalousien 43 verschließbare Öffnungen in den Seitenwänden 34 vorgesehen, wobei diese Jalousieteile auch an dem Dachelement 41 angeordnet sein können. Aus der sehr günstigen Position der Kabine 12 heraus kann der Fahrer problemlos und ohne Einweisungshilfe weiterer Personen exakt an den Flugzeugrumpf heranmanövrieren.

Der Fahrer hat nicht nur Sicht auf die vom Faltenbalg 44 der Plattform 13 und den Seitenwänden 34 gebildete vordere Öffnung der Fluggasttreppe, sondern durch Fenster 42 auch zur Seite hin. Auch auf der gegenüberliegenden Seite sind weitere Fenster angeordnet, insbesondere können dann zum Fahren auf dem Flugplatzvorfeld die Jalousien 43 geöffnet sein. Die Fenster 37 in den Abdeckungen 38, 39 und 40 sind so angeordnet, daß sie genau übereinander zu liegen kommen, wenn die Fluggasttreppe vollständig eingefahren ist.

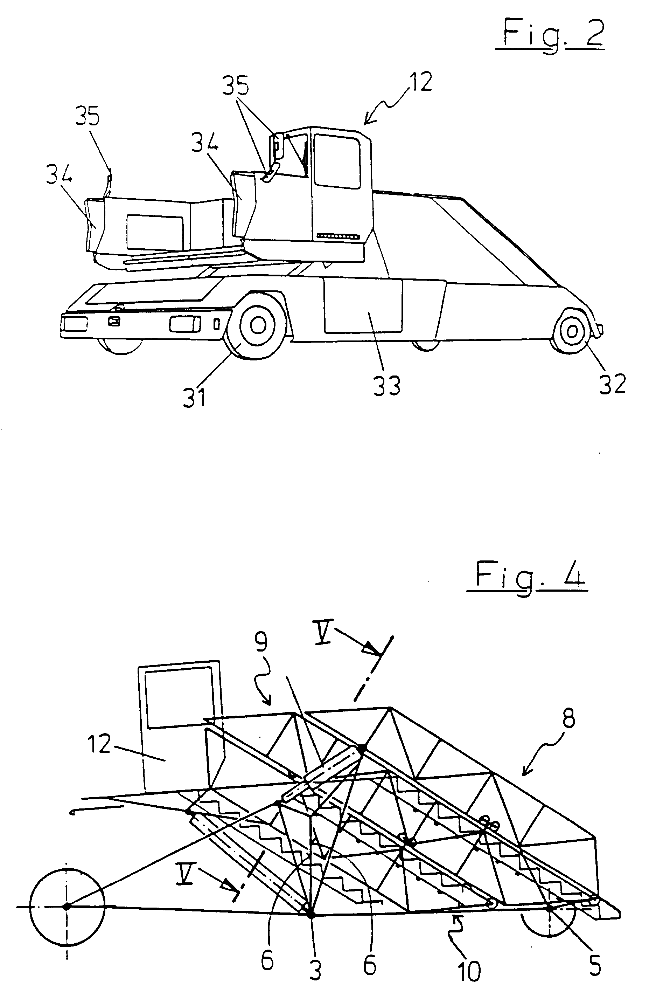

Wie man aus den Figuren 2 und 4 erkennen kann, liegt die Fluggasttreppe im eingefahrenen Zustand im wesentlichen vollständig innerhalb des von den Aufstandspunkten der Räder 31, 32 aufgespannten Rahmens bzw. innerhalb einer vertikalen Projektion dieses Rahmens. Lediglich im Heckbereich der Fluggasttreppe ist ein kleinerer Überstand des unteren Treppenteiles 8 vorgesehen, um das bequeme Besteigen der Fluggasttreppe über die Hinterachse 5 des Fahrgestells 50 hinweg zu ermöglichen. Auch im vollständig ausgefahrenen Zustand, wie er in Figur 3 dargestellt ist, liegt ein Großteil der Treppe noch immer über dem von den Radaufstandspunkten gebildeten Rahmen, so daß auch der Schwerpunkt der gesamten Treppe einschließlich des Fahrgestells selbst bei einer Belastung durch Fluggäste ausschließlich auf der Plattform 13 noch immer deutlich innerhalb dieses Rahmens liegt.

Die Fahrgestellteile 1 und 2 weisen hochgezogene Seitenwandteile 1′ bzw. 2′ auf, die auch als ein Stahlgitter bzw. ein Stahlfachwerk ausgeführt sein können. Die Dreieckform ergibt zwei sehr verwindungssteife Teile 1 und 2 des Fahrgestells 50, welche gegeneinander über das Mittelgelenk 3 verschwenkbar sind. Entsprechend den auf beiden Seiten paarweise vorhandenen Seitenwandteilen 1′, 2′ sind, wie in Figur 1 zu erkennen, auch zwei Hydraulikelemente 7 vorgesehen, welche hydraulisch miteinander gekoppelt sind und jeweils in möglichst großem Abstand zur Achse des Mittelgelenkes 3 an den Teilen 1′ und 2′ angreifen.

Wie man aus Figur 1 weiterhin sieht, werden diese hochgezogenen Seitenteile 1′, 2′ von der Abdeckung 37 des unteren Treppenteils mit umfaßt und abgedeckt. Dabei überdecken im eingefahrenen Zustand auch die Abdeckungen 39 und 40 die untere Abdeckung 38.

Wenn die Fluggasttreppe im eingefahrenen Zustand über ein Flughafenvorfeld gefahren wird, werden die Hydraulikelemente 7 entlastet, so daß die einander zugewandten Kanten 6′, 6 der hochgezogenen Seitenteile 1′, 2′ aneinander anschlagen, wobei das Mittelgelenk 3 in seine tiefstmögliche Stellung absinkt. Gegebenenfalls kann das Fahrgestell auch in dieser Position verriegelt werden. Man erhält damit auch für schnellere Fahrten ein ausreichend stabiles Fahrgestell 50.

In Figur 2 ist mit 33 ein Batterietrog gekennzeichnet, der für die Aufnahme von Batterien für den elektrischen Antrieb der Fluggasttreppe vorgesehen ist. Dabei verwendet man zweckmäßigerweise zwei 80 Volt-Batterien mit einer Kapazität von 320 Ah sowie für die sonstige Stromversorgung mehrere, gegebenenfalls hintereinandergeschaltete 12 Volt-Batterien.

Durch das flache Fahrgestell ergibt sich Insgesamt auch eine relativ geringe Gesamthöhe der eingefahrenen Fluggasttreppe von nur wenig über 4 m oder darunter.

## Patentansprüche

1. Fluggasttreppe mit einem Fahrgestell (50) mit Antrieb sowie mit einer ausfahrbaren, höhenverstellbaren Treppe (60), dadurch gekennzeichnet, daß das Fahrgestell (50) im wesentlichen aus einem vorderen (1) und einem hinteren Fahrgestellteil (2) besteht, welche durch ein Mittelgelenk (3) verbunden sind, wobei das hintere Fahrgestellteil (2) relativ zum vorderen Fahrgestellteil (1) um die horizontale, zur Hinterachse (5) des Fahrgestells (50) im wesentlichen parallele Achse des Mittelgelenkes (3) schwenkbar ist.

2. Fluggasttreppe nach Anspruch 1, dadurch gekennzeichnet, daß an dem vorderen Fahrgestellteil (1) und an dem hinteren Fahrgestellteil (2) Anschläge (6, 6′) vorgesehen sind, welche ein Verschwenken des hinteren Fahrgestellteils (2) nach unten begrenzen.

3. Fluggasttreppe nach Anspruch 1 oder 2, dadurch gekennzeichnet, daß der Verschwenkwinkel des hinteren Fahrgestellteils, ausgehend von einer Mittelposition, mindestens ± 3° beträgt.

4. Fluggasttreppe nach einem der Ansprüche 1 bis 3, dadurch gekennzeichnet, daß das vordere (1) und das hintere Fahrgestellteil (2) paarweise seitlich außerhalb des Treppenkörpers hochgezogene Seitenteile (1′, 2′) aufweisen, wobei auf einer Seite, angeordnete Seitenteile (1′, 2′) des vorderen und hinteren Teils mit einander zugewandten Kanten (6, 6′) und miteinander fluchtend angeordnet sind, wobei weiterhin diese Kanten (6, 6′) an ihrem unteren Ende über das Mittelgelenk (3) miteinander verbunden sind und die sich von dort nach oben erstreckenden Kanten (6, 6′) einen Endanschlag für das maximal nach unten verschwenkte hintere Teil bilden.

5. Fluggasttreppe nach Anspruch 4, dadurch gekennzeichnet, daß die über das Mittelgelenk miteinander verbundenen Seitenteile (1′, 2′) des vorderen (1) und des hinteren Fahrgestellteils (2) im Abstand vom Mittelgelenk (3) angreifende Hydraulikelemente (7) zum Auseinanderdrücken der Anschlagkanten (6, 6′) und zum Verschwenken der Fahrgestellteile (1, 2) gegeneinander um das Mittelgelenk (3) aufweist.

6. Fluggasttreppe nach einem der Ansprüche 1 bis 5, dadurch gekennzeichnet, daß das hintere Fahrgestellteil (2) fest mit dem unteren Teil (8) der ausfahrbaren Treppe (60) verbunden ist.

7. Fluggasttreppe nach einem der Ansprüche 1 bis 6, dadurch gekennzeichnet, daß die Treppe (60) drei gegeneinander verschiebbare Treppenteile (8, 9, 10) mit je einer Abdeckung (38, 39, 40) als kombiniertes Dach- und Seitenwandelement aufweist.

8. Fluggasttreppe nach Anspruch 7, dadurch gekennzeichnet, daß die Seitenwandelemente der unteren Treppenabdeckung (38) mindestens das hochgezogene Seitenteil (2′) des hinteren Fahrgestellteiles (2) umgreift.

9. Fluggasttreppe nach, Anspruch 7 oder 8, dadurch gekennzeichnet, daß die Abdeckung (39, 40) eines weiter ausfahrbaren Treppenteiles (9, 10) außen auf die Abdeckung (38, 39) des jeweils vorhergehenden Treppenteiles (8, 9) aufschiebbar ist und dieses im eingefahrenen Zustand der Treppe (60) umgreift.

10. Fluggasttreppe nach einem der Ansprüche 1 bis 9, dadurch gekennzeichnet, daß die Treppe (60) mindestens ein oberes Treppenteil (10) mit einer oberen Plattform (13) aufweist, wobei ein Fahr- und Bedienstand (12) für die Fluggasttreppe auf der Plattform (13) angeordnet ist und über hydraulische und/oder elektrische Zuleitungen mit den Antriebs- und/oder Betriebseinrichtungen des Fahrgestells (50) und der Treppe (60) verbunden ist.

11. Fluggasttreppe nach Anspruch 10, dadurch gekennzeichnet, daß das vordere Ende der oberen Plattform (13) und der sich gegebenenfalls von dieser nach oben erstreckenden Seitenwände (34) einfedernde, an ihren Vorderkanten gepolsterte Plattenteile aufweist.

12. Fluggasttreppe nach Anspruch 11, dadurch gekennzeichnet, daß die von der Abdeckung (40) des oberen Treppenteiles (10) ausgehende Abdeckung (41) der Plattform (13) in ihrem vorderen, dem Flugzeugrumpf zuzuwendenden Bereich einen Faltenbalg (44) zum Anlegen an Flugzeugrümpfe unterschiedlichen Durchmessers aufweist.

13. Fluggasttreppe nach einem der Ansprüche 1 bis 12, dadurch gekennzeichnet, daß Spurweite und Radstand des Fahrgestells (50) so gewählt werden, daß die Treppe (60) in eingefahrenem Zustand im wesentlichen vollständig innerhalb einer vertikalen Projektion des von den Radaufstandspunkten aufgespannten Rahmens liegt, wobei im ausgefahrenen Zustand der Treppe (60) der Schwerpunkt von Fahrgestell (50) und der Treppe (60) deutlich innerhalb dieses Rahmens und im Abstand zur Vorderachse (4) des Fahrgestells (50) liegt.

14. Fluggasttreppe nach Anspruch 13, dadurch gekennzeichnet, daß der Abstand des Schwerpunktes der ausgefahrenen Fluggasttreppe von der Vorderachse (4) des Fahrgestells (50) mindestens 1 m beträgt.

15. Fluggasttreppe nach einem der Ansprüche 1 bis 14, dadurch gekennzeichnet, daß für die Bereifung der Räder (31, 32) Vollmaterialreifen aus einem Elastomeren verwendet werden.

16. Fluggasttreppe nach einem der Ansprüche 1 bis 15, dadurch gekennzeichnet, daß die Spurweite des Fahrgestells (50) mindestens 2 m und der Radstand mindestens 6 m beträgt.

17. Fluggasttreppe nach einem der Ansprüche 1 bis 16, dadurch gekennzeichnet, daß für den Antrieb des Fahrgestells und für gegebenenfalls vorgesehene Hydraulikpumpen Elektromotoren vorgesehen sind.

## Claims

1. Aircraft passenger steps having a movable supporting body (50) with a drive and with pull-out steps (60) which are adjustable in height, characterised in that the movable supporting body (50) consists basically of a front (1) and a rear (2) movable supporting body section which are connected by a central articulation (3), wherein the rear movable supporting body section (2) is pivotable relative to the front movable supporting body section (1) about the horizontal axis of the central articulation (3), which axis is substantially parallel to the rear axis (5) of the movable supporting body (50).

2. Aircraft passenger steps according to Claim 1, characterised in that abutments (6, 6') are provided on the front (1) and rear (2) movable supporting bodies (1) to restrict downward pivotal movement of the rear movable supporting body (2).

3. Aircraft passenger steps according to Claim 1 or Claim 2, characterised in that the pivot angle of the rear movable supporting body section is at least ± 3°, starting from a central position.

4. Aircraft passenger steps according to one of Claims 1 to 3, characterised in that the front (1) and rear (2) movable supporting body sections have side sections (1', 2'), in pairs, which are drawn up laterally outside the body of the steps, wherein side sections (1', 2'), arranged on one side, of the front and rear sections, are arranged so that they are flush with mutually facing edges (6, 6') and with each other, wherein these edges (6, 6') communicate at the bottom end thereof by way of the central articulation (3), and the edges (6, 6') which extend upwardly thence form an end abutment for the rear section which is pivoted to the maximum in the downward extent.

5. Aircraft passenger steps according to Claim 4, characterised in that the side sections (1', 2'), connected together by way of the central articulation, of the front (1) and rear (2) movable supporting body sections, at a spacing from the central articulation (3), have operative hydraulic elements (7) for pushing apart the abutment edges (6, 6') and for pivoting the movable supporting body sections (1, 2) relative to each other about the central articulation (3).

6. Aircraft passenger steps according to one of Claims 1 to 5, characterised in that the rear movable supporting body section (2) is fixedly connected to the bottom part (8) of the pull-out steps (60).

7. Aircraft passenger steps according to one of Claims 1 to 6, characterised in that the steps (60) have three step sections (8, 9, 10) which are displaceable relative to each other, each step section having an enclosing surface (38, 39, 40) in the form of a combined roof- and side wall element.

8. Aircraft passenger steps according to Claim 7, characterised in that the side wall elements of the bottom step enclosing surface (38) at least engage over the upwardly pulled side section (2') of the rear movable supporting body section (2).

9. Aircraft passenger steps according to Claim 7 or Claim 8, characterised in that the enclosing surface (39, 40) of one step section (9, 10) which can be pulled out further can be pushed outwardly onto the enclosing surface (38, 39) of the previous step section (8, 9), and engages over this latter when the steps (60) are in the retracted condition.

10. Aircraft passenger steps according to one of Claims 1 to 9, characterised in that the steps (60) have at least one upper step section (10) with an upper platform (13), wherein a driving- and operating stand (12) for the aircraft passenger steps is arranged on the platform (13) and is connected by way of hydraulic and/or electrical supply lines to the driving- and/or operating devices of the movable supporting body (50) and of the steps (60).

11. Aircraft passenger steps according to Claim 10, characterised in that the front end of the upper platform (13) and the front edges of the side walls (34) which may extend upwardly from the platform have upholstered panel sections.

12. Aircraft passenger steps according to Claim 11, characterised in that the enclosing surface (41) of the platform (13) which starts from the enclosing surface (40) of the upper step section (10), in its front region facing the aircraft fuselage, has a gangway bellows (44) which is to be placed on aircraft fuselages of varying diameter.

13. Aircraft passenger steps according to one of Claims 1 to 12, characterised in that the track gauge and wheel base of the movable supporting body (50) are selected such that in the retracted condition the steps (60) are disposed almost completely inside a vertical projection of the frame spanned by the points of the wheel tread, wherein, when the steps (60) are in the pulled out condition, the centre of gravity of the movable supporting body (50) and of the steps (60) is clearly within this frame and at a spacing from the front axis (4) of the movable supporting body (50).

14. Aircraft passenger steps according to Claim 13, characterised in that the spacing of the centre of gravity of the pulled out aircraft passenger steps from the front axis (4) of the movable supporting body (50) is at least 1 m.

15. Aircraft passenger steps according to one of Claims 1 to 14, characterised in that solid material tyres of an elastomer material are used for the tyres fitted to the wheels (31, 32).

16. Aircraft passenger steps according to one of Claims 1 to 15, characterised in that the track gauge of the movable supporting body (50) is at least 2 m, and the wheel base is at least 6 m.

17. Aircraft passenger steps according to one of Claims 1 to 16, characterised in that electric motors are provided for the drive of the movable supporting body and for hydraulic pumps which may be provided.

## Revendications

1. Escalier d'aéroport pour passagers, muni d'un châssis (50) comportant un entraînement, ainsi que d'un escalier (60), escamotable et réglable en hauteur, caractérisé en ce que le châssis (50) est pour l'essentiel constitué d'une partie de châssis avant (1) et d'une partie de châssis arrière (2), qui sont reliées par une articulation centrale (3), la partie de châssis arrière (2) pouvant pivoter par rapport à la partie de châssis avant (1) autour de l'axe de l'articulation centrale (3), horizontal et pour l'essentiel parallèle à l'essieu arrière (5) du châssis (50).

2. Escalier pour passagers selon la revendication 1, caractérisé en ce qu'on prévoit au niveau de la partie de châssis avant (1) et de la partie de châssis arrière (2) des butées (6, 6') qui limitent vers le bas le pivotement de la partie de châssis arrière (2).

3. Escalier pour passagers selon la revendication 1 ou 2, caractérisé en ce que l'angle de pivotement de la partie de châssis arrière, à partir d'une position centrale, est d'au moins ± 3°.

4. Escalier pour passagers selon l'une des revendications 1 à 3, caractérisé en ce que la partie de châssis avant (1) et la partie de châssis arrière (2) comportent des parties latérales (1', 2'), relevées latéralement par paires à l'extérieur du corps de l'escalier, les parties latérales (1', 2'), disposées sur un côté, de la partie avant et de la partie arrière étant disposées avec des arêtes (6, 6') en regard l'une de l'autre, et en alignement l'une avec l'autre, ces arêtes (6, 6') étant en outre reliées l'une à l'autre en leur extrémité inférieure par l'intermédiaire de l'articulation centrale (3), les arêtes (6, 6') qui partent de là pour s'étendre vers le haut formant une butée en bout, pour la partie arrière subissant un pivotement maximal vers le bas.

5. Escalier pour passagers selon la revendication 4, caractérisé en ce que les parties latérales (1', 2'), reliées l'une à l'autre par l'intermédiaire de l'articulation centrale, de la partie de châssis avant (1) et de la partie de châssis arrière (2), comportent des éléments hydrauliques (7), agissant à distance de l'articulation centrale (3), pour séparer les arêtes de butée (6, 6') et pour faire pivoter les parties de châssis (1, 2) l'une contre l'autre autour de l'articulation centrale (3).

6. Escalier pour passagers selon l'une des revendications 1 à 5, caractérisé en ce que la partie de châssis arrière (2) est liée à demeure à la partie inférieure (8) de l'escalier escamotable (60).

7. Escalier pour passagers selon l'une des revendications 1 à 6, caractérisé en ce que l'escalier (6) comporte trois parties d'escalier (8, 9, 10) pouvant coulisser les unes par rapport aux autres, chaque partie d'escalier comportant une couverture (38, 39, 40) servant d'élément combiné de toit et de paroi latérale.

8. Escalier pour passagers selon la revendication 7, caractérisé en ce que les éléments de paroi latérale de la couverture inférieure d'escalier (38) entourent au moins la partie latérale relevée (2') de la partie de châssis arrière (2).

9. Escalier pour passagers selon la revendication 7 ou 8, caractérisé en ce que la couverture (39, 40) d'une partie d'escalier (9, 10) pouvant se déployer encore plus peut, à l'extérieur, coulisser sur la couverture (38, 39) de la partie d'escalier précédente (8, 9), en entourant cette dernière quand l'escalier (60) est rentré.

10. Escalier pour passagers selon l'une des revendications 1 à 9, caractérisé en ce que l'escalier (60) comporte au moins une partie d'escalier supérieure (10), avec une plate-forme supérieure (13), un poste de commande et de manoeuvre (12) de l'escalier pour passagers étant disposé sur la plate-forme (13) et étant, par l'intermédiaire de canalisations hydrauliques et/ou de lignes électriques, relié aux dispositifs d'entraînement et/ou de manoeuvre du châssis (50) et de l'escalier (60).

11. Escalier pour passagers selon la revendication 10, caractérisé en ce que l'extrémité avant de la plate-forme supérieure (13) et les parois latérales (34), qui éventuellement s'étendent vers le haut à partir de cette dernière, comportent des éléments de plaque à effet de ressort et rembourrés sur leurs arêtes avant.

12. Escalier pour passagers selon la revendication 11, caractérisé en ce que la couverture (41) de la plate-forme (13), cette couverture partant de la couverture (40) de la partie d'escalier supérieure (10), comporte dans sa zone avant, qui va être dirigée vers le fuselage de l'avion, un soufflet (44), destiné à s'appuyer contre des fuselages ayant des diamètres différents.

13. Escalier pour passagers selon l'une des revendications 1 à 12, caractérisé en ce que la voie et l'empattement du châssis (50) sont choisis de façon que l'escalier (60), quand il est rentré, se trouve essentiellement en totalité à l'intérieur d'une projection verticale du cadre défini par les points de contact des roues, le centre de gravité du châssis (50) et de l'escalier (60), quand l'escalier (60) est en extension, se trouvant nettement à l'intérieur de ce cadre, et à une certaine distance de l'essieu avant (4) du châssis (50).

14. Escalier pour passagers selon la revendication 13, caractérisé en ce que la distance du centre de gravité de l'escalier en extension à l'essieu avant (4) du châssis (50) est d'au moins 1 m.

15. Escalier pour passagers selon l'une des revendications 1 à 14, caractérisé en ce qu'on utilise pour les pneus des roues (31, 32) des pneus pleins en un élastomère.

16. Escalier pour passagers selon l'une des revendications 1 à 15, caractérisé en ce que la voie du châssis (50) est d'au moins 2 m, et que son empattement est d'au moins 6 m.

17. Escalier pour passagers selon l'une des revendications 1 à 16, caractérisé en ce qu'on prévoit des moteurs électriques pour l'entraînement du châssis et pour les pompes hydrauliques éventuellement prévues.
